# EUROPÄISCHE PATENTSCHRIFT

(11) **EP 1 061 269 B1**
(45) Veröffentlichungstag und Bekanntmachung des Hinweises auf die Patenterteilung: **02.08.2006**
(21) Anmeldenummer: 00112108.6
(22) Anmeldetag: 06.06.2000
(51) Int. Cl.: F15B 19/00, F15B 20/00, F15B 21/08, B64C 13/00

(54) **Verfahren und Vorrichtung zum Erkennen einer Fehlfunktion von Stellantrieben**
Method and device for detecting faulty operation of a positioning drive
Procédé et dispositif pour la détection de l'opération défectueuse d'un actionneur de positionnement

(30) Priorität: 16.06.1999 DE 19927372
(43) Veröffentlichungstag der Anmeldung: 20.12.2000
(73) Patentinhaber: EADS Deutschland GmbH, 85521 Ottobrunn (DE)
(72) Erfinder: Glawleschkoff, Basilius, 81667 München (DE); Mund, Günter, 82024 Taufkirchen (DE); Harzer, Peter, 82008 Unterhaching (DE)

(56) Entgegenhaltungen:
- EP-A- 0 288 034
- EP-A- 0 404 223
- US-A- 4 472 780
- MARE J-CH: "COMMANDES DE VOL HYDRAULIQUES: UNE EVOLUTION VERS LA MECATRONIQUE" ENERGIE FLUIDE, CFE. PARIS, FR, Bd. 35, Nr. SPECIAL, 1. Dezember 1997 (1997-12-01), Seiten 6-8,10, XP000731548 ISSN: 0291-8331

## Beschreibung

Die Erfindung betrifft einen Stellantrieb nach dem Oberbegriff des Patentanspruchs 1.

Störungen in solchen Stellantrieben, die häufig für Fahrzeuge und insbesondere Arbeitsmaschinen oder Flugzeuge zur Anwendung kommen, können große Auswirkungen auf die Betriebssicherheit der betroffenen Fahrzeuge, Arbeitsmaschinen oder Flugzeuge haben. Bei Flugzeugen mit ausschließlich primären Steuerflächen, d. h. mit Steuerflächen, die in jedem Moment eines beliebigen Manövers zur Steuerung des Flugzeugs notwendig sind, kann der Ausfall einer Steuerfläche einen Fehler mit katastrophalen Folgen bedeuten. Entsprechend wichtig ist die Erkennung von Fehlern im Stellantrieb.

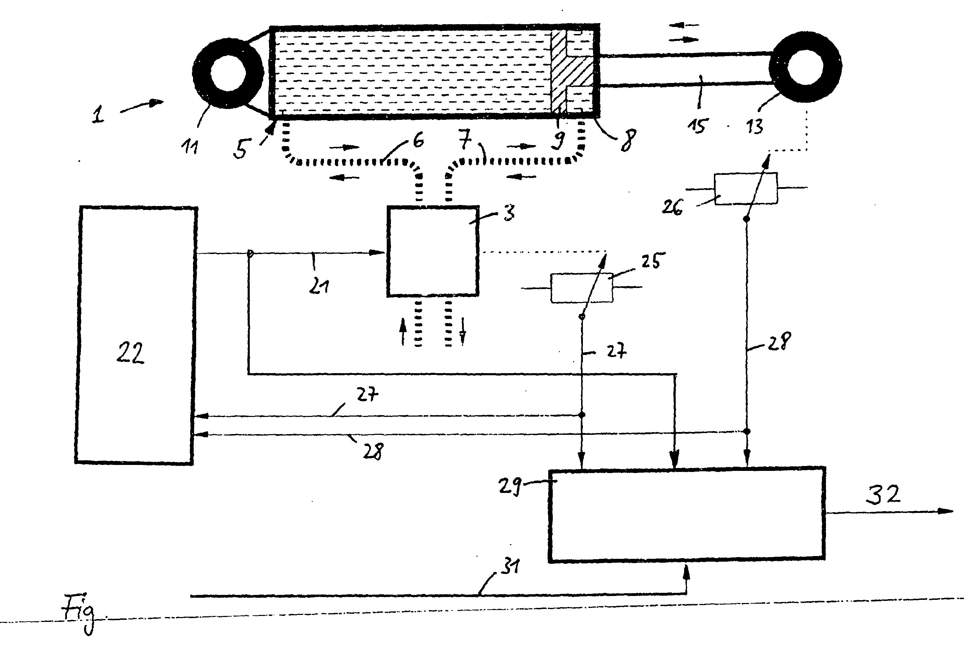

Aus der US-A-4 472 780 ist ein Stellantrieb mit den Merkmalen nach dem Oberbegriff des Patentanspruchs 1 bekannt. Laut Funktionsbeschreibung des vorbekannten Stellantriebs, insbesondere mit Bezug auf die dortigen Fig. 9 und 11 handelt es sich um einen Stellantrieb mit Rückführung und Fehlererkennung, bei dem ein Vergleich von redundanten Kanälen und Modellen stattfindet. Es werden alle Aktuatoren erfasst, die für eine Flugzeugfläche vorgesehen sind. Mit dem Lane- und Modellvergleich erfolgt eine Abschaltung nur dann, wenn Differenzen zwischen den Lanes auftreten, sei es zwischen Stellwegen oder Geschwindigkeiten. Eine Fehlererkennung ist also nur dann gewährleistet, wenn zwischen den einzelnen Lanes Differenzen auftreten, die einen bestimmten Schwellwert überschreiten. Tritt jedoch ein genereller Fehler auf, ohne Lane-Differenz so erfolgt keine Fehlermeldung bzw. Abschaltung. Das bekannte Verfahren ist also ein klassisches Modell- und Kanalvergleichsverfahren.

Aufgabe der vorliegenden Erfindung ist es, einen Stellantrieb nach dem Oberbegriff des Patentanspruchs 1 zu schaffen, der eine Fehlererkennungseinrichtung aufweist, die eine Plausibilitätsprüfung zwischen den gegebenen Stellkommandos und der Aktuatorreaktion beinhaltet. Mittels dieser Plausibilitätsprüfung soll also überwachbar sein, ob ein Stellantrieb tatsächlich eine wichtige und laut Steuerbefehl gewollte Funktion ausführt.

Erfindungsgemäß wird die gestellte Aufgabe dadurch gelöst, dass bei einem Stellantrieb mit den Merkmalen nach dem Oberbegriff des Patentanspruchs 1 die Fehlererkennungsseinrichtung mit Modulen ausgestattet ist, welche
a) aus den Signalen des zweiten Sensors die tatsächliche Laufgeschwindigkeit und Laufrichtung des Aktuator-Kolbens ermitteln und
b) aus dem Sollwert für die Steuerstellung des Servoventils einen Sollbetrag für die Laufgeschwindigkeit und für die Laufrichtung des Aktuator-Kolbens errechnen,
c) diesen errrechneten Sollbetrag mit dem nach a) ermittelten Istwerten für Laufgeschwindigkeit und Laufrichtung des Aktuator-Kolbens in Beziehung setzen und
d) bei Abweichungen über einen vorgegebenen Schwellwert hinaus eine Fehlermeldung abgeben.

Vorteilhafte Ausgestaltungen des erfindungsgemäßen Stellantriebs sind in den Unteransprüchen 2 bis 5 aufgezeigt.

Der wesentliche Vorteil der erfindungsgemäßen Einrichtung gegenüber vergleichbaren Einrichtungen im Stand der Technik, wie sie in der eingangs genannten US-A 4 472 780 oder der EP-A 0 288 034 oder auch der EP-A 0 404 223 offenbart sind, besteht darin, dass eine sichere Überprüfung erzielt wird, ob ein angesteuerter Aktuator sich in Übereinstimmung mit den Steuerbefehlen korrekt bewegt, d. h. in die richtige Richtung und mit der erwünschten Bewegungsgröße oder ob er eine fehlerhafte Bewegung oder womöglich gar keine Bewegung ausführt; dabei erfolgt diese Überprüfung mit vergleichsweise einfachen Mitteln.

Im folgenden wird die Erfindung an Hand der beigefügten Figur beschrieben, die einen Stellantrieb mit Aktuator, mit einem diesen steuernden Servoventil, einer zugehörigen Steuer-Elektronik sowie einer erfindungsgemäßen Fehlererkennungs-Einrichtung zeigt.

In der Figur ist ein Stellantrieb 1 mit einem Servoventil 3 und einem Stellglied oder Aktuator 5 gezeigt, die über zwei Hydraulik-Leitungen 6, 7 miteinander verbunden sind. Die Hydraulik-Leitungen sind jenseits des Verschiebungsweges, d. h. außerhalb der Umkehrpunkte eines im Gehäuse 8 des Aktuators 5 verschieblichen Kolbens 9 an den Aktuator 5 angeschlossen. Das Servoventil 3 steuert mittels eines in diesem vorgesehenen Steuerorgan (nicht gezeigt) den Zu- und Abfluss von Hydraulik-Flüssigkeit und insbesondere Hydraulik-Öl durch die Hydraulik-Leitungen 6, 7 zur Bewegung des Kolbens 9 im Aktuator 5.

Bei einer Verwendung des Aktuators 5 in einem Flugzeug wird eine entsprechende erste Öse 11 des Aktuator-Gehäuses 8 beispielsweise in oder an einer Tragfläche drehbar gelagert. Eine zweite Öse 13, die am freien Ende einer am Kolben 9 angebrachten und sich von dort entgegengesetzt zur Position der ersten Öse 11 erstreckenden Kolbenstange 15 vorgesehen ist, dient zur drehbaren Lagerung des Kolbenstangen-seitigen Endes des Aktuators 5 beispielsweise an einer Steuerfläche (nicht gezeigt). Durch ein gesteuertes Ein- und Ausfahren der Kolbenstange 15 kann somit eine Steuerfläche bewegt werden.

Dem Servoventil 3 ist über eine Daten- oder Signalleitung 21 eine Steuer-Elektronik 22 zugeordnet. Diese sendet eine zeit-abhängige Soll-Position in Form eines elektrischen Signals an das Servoventil 3, mit der bei gegebenen hydraulischen Verhältnissen eine momentane Aktuator-Position bewirkt wird.

Zur Regelung der Position des Aktuators 5 bzw. dessen Kolbenstange 9 ist ein erster Sensor 25 zur Erfassung der Position des Steuerorgans im Servoventil 3 und ein zweiter Sensor 26 zur Erfassung der Stellung der Öse 13 bzw. der Kolbenstange 15 vorgesehen. Die Signale der Sensoren 25, 26 werden über Signal-Leitungen 27, 28 an die Steuer-Elektronik 22 und eine Fehlererkennungs-Einrichtung 29 geschickt. Die Fehlererkennungs-Einrichtung 29 kann jedoch auch Bestandteil der Steuer-Elektronik 22 oder eines anderen Computer-Moduls (nicht gezeigt) des Fahrzeugs sein. Die Fehlererkennungs-Einrichtung 29 berechnet aus den Signalen, die dieser von dem zweiten Sensoren 26 empfängt, die Laufrichtung und Laufgeschwindigkeit des Aktuator-Kolbens 9. In entsprechenden weiteren Sensoren und Computern (nicht gezeigt) des Fahrzeugs werden Betriebsbedingungen, wie z.B. Hydraulik-Drücke, Aktuator-Lasten oder Stellgrößen, erfaßt und ermittelt. Entsprechende Daten oder Signale werden der Fehlererkennungs-Einrichtung 29 mittels Signal- oder Daten-Leitungen 31 zugeführt.

Erfindungsgemäß ist in der Fehlererkennungs-Einrichtung 29 ein Modul mit einer Funktion implementiert, durch die der Betrag und die Richtung des Sollwert-Signals 21 zum Servoventil mit der Richtung und Laufgeschwindigkeit des Aktuators in Beziehung gesetzt wird und bei unzulässigen Abweichungen vom Sollwert ein Ausgangssignal ausgegeben wird. Bei der Bewertung der Abweichungen können Betriebsbedingungen des Fahrzeugs mit in Betracht gezogen werden. Aufgrund dieses Ausgangssignals kann entweder automatisch ein in einem Computer implementierter Abschalt- oder Rekonfigurations-Mechanismus aktiviert werden oder durch den Fahrzeug-Führer manuell eine geeignete Maßnahme zur Überführung des Systems bzw. des Fahrzeugs in einen sicheren Zustand eingeleitet werden.

Im folgenden wird die Funktionsweise der Erfindung beschrieben:

Aufgrund einer Steuervorgabe wird abhängig von der am Aktuator 5 anliegenden äußeren Last eine Zufuhr von Hydraulik-Flüssigkeit über eine der Leitungen 6 bzw. 7 und auf der jeweils anderen Leitung 7 bzw. 6 ein Rücklauf der Hydraulik-Flüssigkeit mit geringerem Druck bewirkt. Dadurch wird die Kolbenstange 15 in die vorgegebene Richtung bewegt. Kehrt sich die Fließrichtung der Hydraulik-Flüssigkeit um, fährt die Kolbenstange 15 in die entgegengesetzte Richtung.

Die Laufgeschwindigkeit des Kolbens 9 wird somit durch die Menge der durch die Hydraulik-Leitungen 6, 7, also auch durch das Servoventil 3 fließenden Hydraulik-Flüssigkeit reguliert. Eine bestimmte Kolben-Laufgeschwindigkeit wird also durch eine bestimmte Stellung, d.h. Öffnung des Servoventils 3 bewirkt.

Ein Fehlerfall im gesamten Stellantrieb 1 liegt beispielsweise dann vor, wenn das Servoventil 3 aufgrund einer entsprechenden Sollwert-Vorgabe durch die Steuer-Elektronik 22 eine vorgegebene Stellung einnehmen soll, bei der der Kolben 9 in einer bestimmten Richtung und mit einer bestimmten Geschwindigkeit bewegt werden soll, jedoch dieser in die falsche Richtung gefahren wird oder sich überhaupt nicht bewegt. In der Fehlererkennungs-Einrichtung 29 erfolgt während des Betriebs des Stellantriebs eine entsprechende Auswertung der von den Sensoren 25, 26 empfangenen Signalen unter Berücksichtigung der Aktuator-Last und unter Berücksichtigung von entsprechenden Betriebsbedingungen, woraus dann eine Fehlfunktion, beispielsweise im Aktuator 5 festgestellt werden kann. Dazu ermittelt die Fehlererkennungs-Einrichtung 29, die mit den Sensoren 25, 26 in Verbindung steht, aus deren Signalen die Laufgeschwindigkeit und die Laufrichtung des Aktuators 5. Zur Überprüfung, ob ein Aktuator-Fehler vorliegt, wird aus dem Sollwert 21 für die Steuerstellung des Servoventils 3 ein Soll-Betrag für die Kolben-Laufgeschwindigkeit und für die Kolben-Laufrichtung ermittelt und dieser mit der aus den Sensorsignalen ermittelten Laufgeschwindigkeit und Laufrichtung des Aktuators 5 in Beziehung gesetzt.

Bei Abweichung der Soll-Laufgeschwindigkeit und Soll-Laufrichtung, die sich aus dem Stellsignal ergeben, das von der Steuer-Elektronik 22 an das Servoventil 3 geschickt wird, von der ermittelten tatsächlichen, und von dem zweiten Sensor 26 erfaßten Laufgeschwindigkeit und Laufrichtung des Aktuators 5, liegt ein Aktuator-Fehler vor. In diesem Fall wird eine Meldung der Fehlfunktion des Aktuators 5 erzeugt, die dann an den Fahrzeug-Führer übermittelt wird.

Bei einer entsprechenden Abweichung oder einer Überschreitung eines vorgegebenen Schwellwertes generiert die Fehlererkennungs-Einrichtung 29 ein Ausgangssignal 32 an eine Anzeige-Einrichtung oder einen anderen Computer bzw. ein anderes Modul, das ein Warnsignal ist oder für eine Warnung verwendet wird. Optional oder alternativ dazu kann das Ausgangssignal der Einrichtung 29 dazu verwendet werden, daß eine Umschaltung auf eine Ersatzsteuerung bewirkt wird.

Die Fehlererkennungs-Einrichtung 29 kann hardware-mäßig am Aktuator 5 bzw. an dessen Gehäuse 8 angebracht sein, d.h. in den zu überwachenden Aktuator 5 oder alternativ in die Steuerelektronik 22 integriert sein.

Die Fehlererkennungs-Einrichtung 29 kann bei Fehlfunktion des Aktuators 5 eine Fehlermeldung in Abhängigkeit der Sollwertabweichung zeitabhängig ausgeben.

Die Fehlererkennungs-Einrichtung 29 kann Mittel zur Anpassung aller betriebswichtigen Parameter aufweisen.

## Patentansprüche

1. Stellantrieb mit einem einen beweglichen Kolben (9) aufweisenden Aktuator (5), mit einem mit diesem über Hydraulik-Leitungen (6, 7) in Verbindung stehenden Servoventil (3), einer Fehlererkennungs-Einrichtung (29) und mit einer Steuer-Elektronik (22) zur Abgabe eines Sollwerts (21) zur Steuerung des Servoventils (3), wobei die Steuerstellung des Servoventils (3) die Laufrichtung und Laufgeschwindigkeit des Kolbens (9) im Aktuatorgehäuse (8) bestimmt, wobei ein erster Sensor (25) zur Ermittlung der Steuerstellung des Servoventils (3) und ein zweiter Sensor (26) zur Ermittlung der Position des Kolbens (9) vorgesehen sind und die Übertragungsverbindungen von den Sensoren (25, 26) zur Steuerelektronik (22) und zur Fehlererkennungseinrichtung (29) bestehen, und Signalverbindungen von der Steuerelektronik (22) (Sollwert 21) zur Fehlererkennungseinrichtung (29) vorgesehen sind,
**dadurch gekennzeichnet, dass** die
Fehlererkennungseinrichtung (29) mit Modulen ausgestattet ist, welche
a) aus den Signalen des zweiten Sensors (26) die tatsächliche Laufgeschwindigkeit und Laufrichtung des Aktuator-Kolbens (9) ermitteln und
b) aus dem Sollwert (21) für die Steuerstellung des Servoventils (3) einen Sollbetrag für die Laufgeschwindigkeit und für die Laufrichtung des Aktuator-Kolbens (9) errechnen,
c) diesen errechneten Sollbetrag mit den nach a) ermittelten Istwerten für Laufgeschwindigkeit und Laufrichtung des Aktuator-Kolbens (9) in Beziehung setzen und
d) bei Abweichung über einen Schwellwert hinaus eine Fehlermeldung (Ausgangssignal 32) abgeben.

2. Stellantrieb nach Anspruch 1, **dadurch gekennzeichnet, dass** das Ausgangssignal (32) der Fehlererkennungs-Einrichtung (29) für eine Warnung verwendet wird.

3. Stellantrieb nach dem Anspruch 1 oder 2, **dadurch gekennzeichnet, dass** das Ausgangssignal (32) der Fehlererkennungs-Einrichtung (29) eine Umschaltung auf eine Ersatzsteuerung bewirkt.

4. Stellantrieb nach Anspruch 1, **dadurch gekennzeichnet, dass** die Fehlererkennungs-Einrichtung (29) in den zu überwachenden Aktuator (5) integriert ist.

5. Stellantrieb nach einem der Ansprüche 1 bis 3, **dadurch gekennzeichnet, dass** die Fehlererkennungs-Einrichtung (29) in die Steuerelektronik (22) integriert ist.

## Claims

1. Actuating drive with an actuator (5) which has a moving piston (9), with a servo valve (3) which is connected to the said actuator via hydraulic lines (6, 7), a fault-identification device (29) and with control electronics (22) for outputting a setpoint value (21) for controlling the servo valve (3), with the control position of the servo valve (3) defining the running direction and running speed of the piston (9) in the actuator housing (8), with a first sensor (25) being provided for determining the control position of the servo valve (3) and a second sensor (26) being provided for determining the position of the piston (9) and the said sensors comprising transmission connections from the sensors (25, 26) to the control electronics (22) and to the fault-identification device (29), and signal connections being provided from the control electronics (22) (setpoint value 21) to the fault-identification device (29),
**characterized in that** the
fault-identification device (29) is equipped with modules which
a) determine the actual running speed and running direction of the actuator piston (9) from the signals from the second sensor (26), and
b) calculate a setpoint magnitude for the running speed and for the running direction of the actuator piston (9) from the setpoint value (21) for the control position of the servo valve (3),
c) correlate this calculated setpoint magnitude with the actual values for the running speed and running direction of the actuator piston (9) which are determined according to a), and
d) output a fault message (output signal 32) in the event of a deviation above a threshold value.

2. Actuating drive according to Claim 1, **characterized in that** the output signal (32) from the fault-identification device (29) is used for warning purposes.

3. Actuating drive according to Claim 1 or 2, **characterized in that** the output signal (32) from the fault-identification device (29) causes a switch-over to a standby control system.

4. Actuating drive according to Claim 1, **characterized in that** the fault-identification device (29) is integrated in the actuator (5) to be monitored.

5. Actuating drive according to one of Claims 1 to 3, **characterized in that** the fault-identification device (29) is integrated in the control electronics (22).

## Revendications

1. Servomoteur avec un actionneur (5) comportant un piston mobile (9), avec une servovalve (3) qui est en liaison avec celui-ci par l'intermédiaire de conduits hydrauliques (6, 7), avec un dispositif de détection d'erreurs (29) et avec un système électronique de commande (22) pour délivrer une valeur de consigne (21) pour la commande de la servovalve (3), la position de commande de la servovalve (3) déterminant le sens de fonctionnement et la vitesse de fonctionnement du piston (9) dans le carter de l'actionneur (8), un premier capteur (25) étant prévu pour détecter la position de commande de la servovalve (3) et un deuxième capteur (26) étant prévu pour détecter la position du piston (9) et des liaisons de transmission existant entre les capteurs (25, 26) et le système électronique de commande (22), ainsi que le dispositif de détection d'erreurs (29) et des liaisons signalétiques étant prévues entre le système électronique de commande (22) (valeur de consigne 21) et le dispositif de détection d'erreurs (29),
**caractérisé en ce que** le dispositif de détection d'erreurs (29) est équipé de modules, qui
a) à partir des signaux du deuxième capteur (26) détectent la vitesse de fonctionnement effective et le sens de fonctionnement du piston de l'actionneur (9) et
b) à partir de la valeur de consigne (21) pour la position de commande de la servovalve (3) calculent un montant de consigne pour la vitesse de fonctionnement et pour le sens de fonctionnement du piston de l'actionneur (9),
c) mettent en relation ce montant de consigne calculé avec la valeur réelle détectée selon a) pour la vitesse de fonctionnement et pour le sens de fonctionnement du piston de l'actionneur (9),
d) en cas d'écart supérieur à une valeur seuil délivrent un message d'erreur (signal de sortie 32).

2. Servomoteur selon la revendication 1, **caractérisé en ce qu'**on utilise le signal de sortie (32) du dispositif de détection d'erreurs (29) pour un avertissement.

3. Servomoteur selon la revendication 1 ou 2, **caractérisé en ce que** le signal de sortie (32) du dispositif de détection d'erreur (29) provoque une commutation sur un système de commande de remplacement.

4. Servomoteur selon la revendication 1, **caractérisé en ce que** le dispositif de détection d'erreurs (29) est intégré dans l'actionneur (5) devant être supervisé.

5. Servomoteur selon l'une quelconque des revendications 1 à 3, **caractérisé en ce que** le dispositif de détection d'erreurs (29) est intégré dans le système électronique de commande (22).
